# EUROPÄISCHE PATENTSCHRIFT

(11) **EP 3 449 577 B1**
(45) Veröffentlichungstag und Bekanntmachung des Hinweises auf die Patenterteilung: **24.06.2020**
(21) Anmeldenummer: 17723277.4
(22) Anmeldetag: 24.04.2017
(51) Int. Cl.: H04B 7/02, H04L 29/08

(54) **MOBILFUNK-KOMMUNIKATIONSSYSTEM FÜR DEN EINSATZ IN FAHRZEUGEN MIT HOHER LOKALER NUTZERZAHL UND ZUGRIFFSHÄUFIGKEIT**
MOBILE COMMUNICATION SYSTEM FOR USE IN VEHICLES WITH HIGH NUMBERS OF USERS AND ACCESSES
SYSTÈME DE COMMUNICATION DANS UNE VÉHICULE AUX NOMBRES ÉLEVÉES D'UTILISATEURS ET D'ACCÈS

(30) Priorität: 25.04.2016 DE 102016004980; 13.04.2017 DE 102017108056
(43) Veröffentlichungstag der Anmeldung: 06.03.2019
(73) Patentinhaber: Antennentechnik Bad Blankenburg GmbH, 99428 Weimar OT Legefeld (DE)
(72) Erfinder: WEBER, Michael, 81929 München (DE); JANOTT, Ralf, 99092 Erfurt (DE)
(74) Vertreter: Kruspig, Volkmar
(86) Internationale Anmeldenummer: PCT/EP2017/059583
(87) Internationale Veröffentlichungsnummer: WO 2017/186605

(56) Entgegenhaltungen:
- WO-A1-2016/007295

## Beschreibung

Die Erfindung betrifft ein Mobilfunk-Kommunikationssystem für den Einsatz in Fahrzeugen mit hoher lokaler Nutzerzahl und ebenfalls hoher Zugriffshäufigkeit gemäß Patentanspruch 1.

Hinsichtlich der Art von Mobilfunkverträgen existieren unterschiedliche Möglichkeiten der Abwicklung zum Datenaustausch. Für den automatischen Datenaustausch zwischen Maschinen, Geräten und Fahrzeugen kommen auch Mobilfunknetze zum Einsatz. Machine-to-Machine (M2M) stellt hierbei einen automatisierten Informationsaustauch zwischen Endgeräten, z.B. Fahrzeugen untereinander oder mit einer zentralen Leitstelle dar. Eine mögliche Anwendung ist z.B. die Steuerung und Kontrolle sowie die Fernüberwachung von Anlagen und Systemen. Bei M2M-Systemen wird zunächst von einem Datenendpunkt ausgegangen. Dies kann z.B. eine zu überwachende Maschine sein. Weiterhin wird auf ein Kommunikationsnetz, insbesondere ein Mobilfunknetz zurückgegriffen. Letztendlich ist ein bekannter, mit IP-Adressen versehener Datenintegrationspunkt (DIP) vorhanden. Dies ist z.B. ein Server, der Daten aller angeschlossenen zu überwachenden Maschinen speichert.

Verträge mit Telekommunikations-Dienstleistern zu M2M-Systgemen zielen auf die Abdeckung größerer Regionen und sind auf verschiedene Anwendungen zugeschnitten und üblicherweise kostengünstiger als sogenannte freie lokale Verträge, welche beliebige, in der Regel hochvolumige ungeregelte Zugriffe in das Internet über das jeweilige Mobilfunknetz erlauben. Freie Verträge sind üblicherweise auf eine bestimmte Region je nach Vertragsabschluss begrenzt. In vielen Fällen fallen zusätzliche Roaming-Gebühren an.

Aus der DE 10 2011 120 827 A1 ist ein Kommunikationsnetzwerk für drahtlose Kommunikation vorbekannt, umfassend eine Basisstation, ein drahtloses Endgerät und wenigstens einen Repeater, der zwischen Endgerät und Basisstation geschaltet ist. Endgerät und Basisstation sind derart verbunden, dass ein Kommunikationssignal auf multiplen Informationskanälen, unter Nutzung freier Funkfrequenzen gesendet werden kann. Auch ist der Einsatz von LTE-Modems und die MIMO-Technologie in dieser Druckschrift offenbart.

Die WO 2013/000752 A1 betrifft ein Kommunikationssystem mit mehreren Antennen unter Einsatz der MIMO-Technologie.

Die WO 2012/061765 A1 bezieht sich auf eine drahtlose Sende- und Empfangseinheit mit zwei Frequenztechnologien, wobei Nachrichten von der Sende- und Empfangseinheit über ein LTE-Netzwerk übertragen werden.

WO2016/007295 betrifft ein System mit mehreren Modems, zur Übergabeverwaltung in einem Fahrzeug.

Mit dem zu schaffenden Mobilfunk-Kommunikationssystem für den Einsatz in Fahrzeugen soll die Summe aller möglichen Anwendungen mit Zugriff auf das Internet bezogen auf die oben erwähnten Vertragstypen getrennt werden und somit eine optimale Wirtschaftlichkeit für Zugriffe über das Internet über Mobilfunknetze realisierbar sein. Darüber hinaus soll eine hohe Datenmenge und eine über typische Einzelmodems hinausgehende hohe Nutzerzahl erreicht werden. Wird das Mobilfunksystem gemäß der Erfindung z.B. in Bussen eingesetzt, liegt eine typische Nutzeranzahl im Bereich von 100 und mehr Personen.

Die Lösung der Aufgabe der Erfindung erfolgt mit der Lehre nach Patentanspruch 1, wobei die Unteransprüche zweckmäßige Weiterbildungen darstellen.

Der erfindungsgemäße Lösungsansatz liegt darin, eine Matrix von Modems vorzusehen und zu verschalten, welche gruppenweise den oben erwähnten Mobilfunk-Nutzungstypen oder Nutzungsarten zugeordnet werden.

Ergänzend werden technische Möglichkeiten für einen Diversity-Betrieb genutzt, so dass verschiedene Mobilfunk-Anbieter gleichzeitig genutzt werden können, um im mobilen Betrieb innerhalb eines Fahrzeugs und bei Bewegung desselben jeweils optimale und sichere Datenverbindungen zu schaffen und beizubehalten. Insofern erfolgt eine Trennung freies Netz und M2M-System.

In einer erfindungsgemäßen Ausführungsform sind mindestens zwei Modems für den Kommunikationstyp "freie Verträge" und mindestens ein Modem für den Kommunikationstyp "M2M" vorgesehen.

Jedes Modemmodul besitzt mindestens zwei Antenneneingänge für die MIMO-Technik (Multiple Input Multiple Output).

Unter MIMO wird ein Verfahren bzw. ein Übertragungssystem für die Nutzung mehrerer Sende- und Empfangsantennen zur drahtlosen Kommunikation verstanden. Durch Nutzung eines Codierungsverfahrens lässt sich die Qualität und die Datenrate drahtloser Verbindungen verbessern. Ein Access Point oder ein Router kann mehrere Clients gleichzeitig bedienen und verschiedene Datensätze versenden. Belegte Funkkanäle werden insofern schneller wieder frei.

Durch die Ausbildung der Modemmatrix und einer zugehörigen Antennenmatrix wird vermieden, dass eine hohe Anzahl von Einzelantennen an oder auf dem jeweiligen Fahrzeug zu befestigen ist oder integriert werden muss. Die Antennenmatrix verteilt insofern die jeweiligen Antenneneingänge entweder über passive, splitterähnliche Strukturen, wovon mehrere vorhanden sein können, auf mindestens ein oder mehrere Antenneneingänge, an denen Antennen angeschlossen werden können. Weiterhin können die Antenneneingänge auf aktive, splitterähnliche Strukturen, z.B. SAT-Verteilmatrizen geleitet werden, um eine Verteilung auf ein oder mehrere Antenneneingänge zu erreichen.

Datenseitig stehen die Modemausgänge mit einem Bussystem, z.B. USB-Bus in Verbindung. Das Bussystem wiederum kommuniziert mit ein oder mehreren CPU-Modulen. Beispielsweise kommen zwei CPU-Module bei einer Auftrennung in zwei der oben erwähnten Vertragstypen in Frage, um eine ausreichende Performance der Datenverarbeitung zu gewährleisten oder gegebenenfalls nach Vorgaben der Mobilfunk-Anbieter eine Trennung der zu übertragenden Daten vorzunehmen.

Die entsprechend gebündelten Daten werden einem oder mehreren WLAN-Modulen mit gegebenenfalls MIMO-Antennenanschlüssen oder entsprechenden Fähigkeiten zugeführt und ergänzend einem oder mehreren LAN-Switches übermittelt. Fahrzeuginnenseitig kann dann über das vorerwähnte WLAN oder LAN eine Nutzung des Systems durch die Nutzer erfolgen.

Das System integriert darüber hinaus kundenspezifische Applikations-Software, so dass Internetzugriffe für diverse Anwendungsfälle erlaubt oder unterbunden werden können.

Das vorgestellte System ist skalierbar.

Es gilt das Grundprinzip, dass n Außenantennen eines Fahrzeugs über m Antennenmatrizen mit m als MIMO-Grad, daher n ≥ m jeweils an x · y Modems angeschlossen werden.

Da die jeweilige Funkzelle für jedes Modem gleich ist, ergibt sich ein sinnvoller Einsatz von Antennenmatrizen, welche x · y Datenströme auf p Bussysteme, an dem jeweils ein CPU-Bord angeschlossen ist, an eine WLAN-Antenneneinheit und/oder mindestens einen LAN-Switch weitergeben.

Ergänzend kann ein GPS oder GLONASS-Antenneneingang vorhanden sein, der über einen Receiver mit dem Bussystem in Verbindung steht.

Das vorgestellte System ermöglicht es, in kostengünstiger Weise Modemmodule matrixartig zu verknüpfen und nach kundenspezifischen Wünschen zu kombinieren, ohne dass die Anzahl von Außenantennen in unerwünschter Weise erhöht ist.

Die Erfindung soll nachstehend anhand eines Ausführungsbeispiels und von Figuren näher erläutert werden.

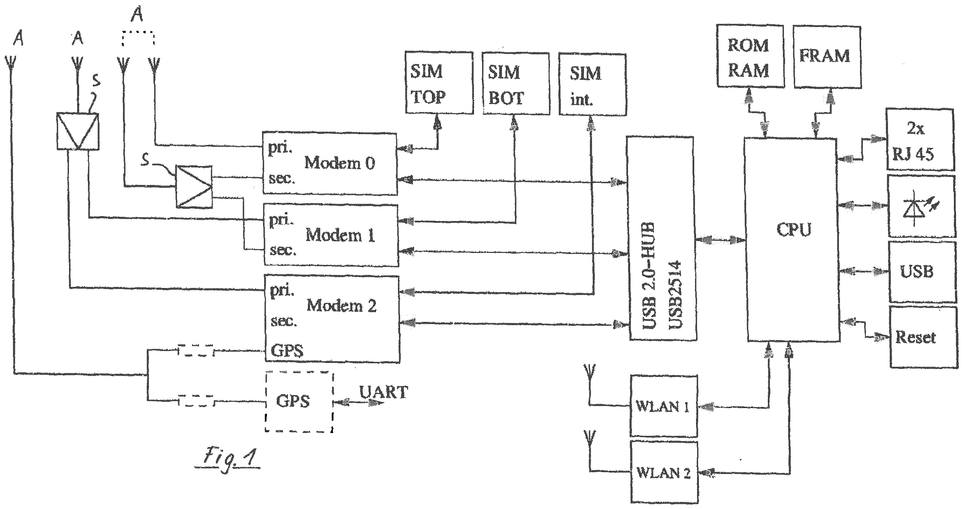

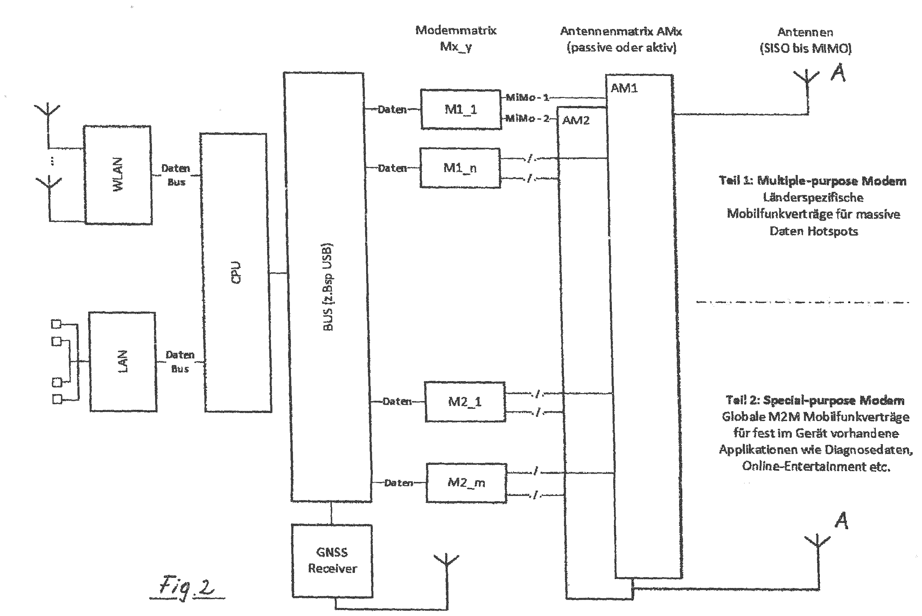

Die Figur 1 zeigt ein Blockschaltbild der Antennen- und Modemmatrix und die Figur 2 ein Blockschaltbild des erfindungsgemäßen Mobilfunk-Kommunikationssystems.

Die Antennenmatrix AMx, die passiv oder aktiv ausgeführt sein kann, steht mit ihren Eingängen mit der Modemmatrix, ausgebildet als Mx-y-Matrix, in Verbindung.

Die Modemmatrix wird über ein Bussystem, z.B. USB-Hub, bedient, welches von einer CPU mit entsprechenden Daten beaufschlagt wird. Die Datenkommunikation erfolgt darüber hinaus unter Nutzung der CPU und eines WLAN-Modems bzw. eines LAN-Switch. Dabei wird der Kerngedanke der Erfindung technisch umgesetzt, die Matrix von Modems so zu nutzen, dass diese gruppenweise verschiedenen Mobilfunk-Nutzungstypen, z.B. Teil 1 und Teil 2, wie in Figur 2 erläutert, zuordenbar sind. Die Zuordnung kann hierbei dynamisch, je nach dem aktuellen Anwendungsfall bzw. der zu übertragenden Datenart erfolgen. Am Bussystem kann ergänzend ein GPS oder GLONASS-Empfänger (GNSS-Receiver) angeschlossen sein.

Die Antennenverteil- und Modemmatrix soll anhand der Figur 1 näher erläutert werden.

Das erfindungsgemäße Mobilfunk-Kommunikationssystem verfügt über eine Modemmatrix mit beispielsweise bis zu drei Modems (Modem 0 bis Modem 2), welche jeweils über mindestens zwei Antenneneingänge für die MIMO-Technik verfügen.

Ziel ist es hier, möglichst viele Modems mit möglichst wenigen Antennen zu versorgen.

Bei einem ersten Anwendungsfall sind beispielsweise drei Antennen und drei Modems verfügbar.

Multi-Purpose Modems (MPM) teilen sich zwei Antennen über einen -3 dB Splitter S.

Der Splitter S verteilt das Signal jeweils auf primäre oder sekundäre Antenneneingänge der Modems. Somit haben alle Eingänge eine gleichmäßige Dämpfung von -3 dB.

Ein Special-Purpose Modem (SPM) verfügt über eine eigene Antenne. Hier wird MIMO nicht genutzt. Der Eingang unterliegt keiner Dämpfung.

Bei einem weiteren Anwendungsfall sind zwei Antennen und drei Modems verfügbar.

Das Eingangssignal der sekundären MPMs und das Eingangssignal des SPMs wird durch einen externen Splitter verteilt. Hierbei ergeben sich eine Eingangsdämpfung von -6 dB auf der Sekundärseite der Multi-Purpose Modems MPMs und eine Dämpfung von -3 dB bei dem Special-Purpose Modem SPM.

Die Multi-Purpose Modems MPM sind ausgelegt für länderspezifische Mobilfunkverträge für massive Daten-Hot-Spots. Die Special-Purpose Modems SPM zielen auf globale M2M-Mobilfunkverträge für fest im Gerät vorhandene Applikationen, wie Diagnosedaten, Online-Entertainment usw.

Das mit Blockschaltbild nach Figur 2 beschriebene Gesamtsystem nutzt also die Modemmatrix Mx-y derart, dass diese gruppenweise verschiedenen Mobilfunknutzungstypen zuordenbar ist, wobei die in Figur 1 näher erläuterte Antennenmatrix Anwendung findet, um mit möglichst wenig Außenantennen auf einem Fahrzeug, möglichst viele Modems und letztendlich viele Nutzer über das lokale WLAN bzw. LAN im Fahrzeug, zum Beispiel einem Omnibus, versorgen zu können. Durch die Möglichkeit eines dynamischen Betriebes ist auch bei einem Ortswechsel des betreffenden Fahrzeuges für eine stabile Versorgung der Fahrgäste und Nutzer gesorgt, ohne dass diese womöglich von Funkzelle zu Funkzelle einen Wechsel zu verschiedenen Anbietern vornehmen müssen und womöglich im Nachhinein durch hohe Kosten überrascht werden, was beispielsweise im grenznahen Verkehr oder im grenzüberschreitenden Verkehr oftmals der Fall ist.

## Patentansprüche

1. Mobilfunk-Kommunikationssystem für den Einsatz in Fahrzeugen mit hoher Nutzerzahl und ebenfalls hoher Zugriffshäufigkeit, **dadurch gekennzeichnet, dass**
die jeweiligen Internet-Zugriffe hinsichtlich der Vertragstypen der Telekommunikationsdienstleister mit unterschiedlicher Abwicklung des Datenverkehrs getrennt werden und hierfür eine Modemmatrix (M_{xy}) vorgesehen und verschalten ist, derart, dass die Einzelmodems (M1; M2) dem jeweiligen Vertragstyp zuordenbar sind, weiterhin jedes Einzelmodem (M1; M2) mindestens zwei MIMO-Antenneneingänge (primär; sekundär) besitzt,
mindestens eine Antennenmatrix (AMx) ausgebildet ist, welche mit der Modemmatrix (M_{xy}) verbunden die von einer minimalen Anzahl von Fahrzeugaußenantennen (A) bereitgestellten und über diese zu sendenden Daten verteilt, wobei bezogen auf den jeweiligen Einsatzfall oder bestehenden Kundenwunsch die Modemmatrix (M_{xy}) und/oder die Antennenmatrix (AMx) individuell konfiguriert ist.

2. Mobilfunk-Kommunikationssystem nach Anspruch 1,
**dadurch gekennzeichnet, dass**
die Modemmatrix (M_{xy}) datenseitig mit mehreren CPU-Modulen (CPU) über ein Bussystem (BUS) kommuniziert, wobei das jeweilige CPU-Modul auf den jeweiligen Vertragstyp spezifiziert ist.

3. Mobilfunk-Kommunikationssystem nach Anspruch 1 oder 2,
**dadurch gekennzeichnet, dass**
die Modemmatrix (M_{xy}) über mindestens drei Modems (Modem 0; Modem 1; Modem 2) verfügt, wobei sich mindestens zwei der Modems die Außenantennen (A) über jeweils einen Splitter (S) teilen.

4. Mobilfunk-Kommunikationssystem nach einem der vorangegangenen Ansprüche,
**dadurch gekennzeichnet, dass**
n Außenantennen (A) des jeweiligen Fahrzeugs über m Antennenmatrizen mit m als MIMO-Grad an xy-Modems angeschlossen sind, wobei n ≥ m ist.

## Claims

1. A mobile radio communication system for use in vehicles with a high number of users and likewise high access frequency,
**characterized in that**
the respective Internet accesses are separated with respect to the types of contract of the telecommunication service providers with different handling of data traffic, and a modem matrix (M_{xy}) is provided and interconnected for this purpose in such a way that the single modems (M1; M2) can be assigned to the respective type of contract, furthermore each single modem (M1; M2) has at least two MIMO antenna inputs (primary; secondary), at least one antenna matrix (AMx) is formed, which, connected to the modem matrix (M_{xy}), distributes data provided and to be transmitted by a minimum number of external vehicle antennas (A), wherein the modem matrix (M_{xy}) and/or the antenna matrix (AMx) is/are individually configured with regard to the respective case of application or existing customer requirement.

2. The mobile radio communication system according to claim 1,
**characterized in that**
on the data side, the modem matrix (M_{xy}) communicates with a plurality of CPU modules (CPU) via a bus system (BUS), wherein the respective CPU module is specified for the respective type of contract.

3. The mobile radio communication system according to claim 1 or 2,
**characterized in that**
the modem matrix (M_{xy}) disposes of at least three modems (Modem 0; Modem 1; Modem 2), wherein at least two of the modems share the external antennas (A) via in each case one splitter (S).

4. The mobile radio communication system according to any one of the preceding claims,
**characterized in that**
n external antennas (A) of the respective vehicle are connected via m antenna matrices, with m as MIMO level, to xy modems, wherein n ≥ m.

## Revendications

1. Système de communication radio mobile destiné à être utilisé dans des véhicules, avec un nombre élevé d'utilisateurs et une fréquence d'accès également élevée, **caractérisé en ce que**
les accès Internet respectifs sont séparés en ce qui concerne les types de contrat des fournisseurs de services de télécommunications avec un traitement différent du trafic de données et une matrice de modems (M_{xy}) est prévue et connectée à cet effet de telle sorte que les modems individuels (M1 ; M2) peuvent être associés au type de contrat respectif, chaque modem individuel (M1 ; M2) possède en outre au moins deux entrées d'antenne MIMO (primaire ; secondaire),
au moins une matrice d'antenne (AMx) est formée qui, reliée à la matrice de modems (M_{xy}), répartit les données mises à disposition par un nombre minimal d'antennes extérieures de véhicule (A) et devant être envoyées par l'intermédiaire de celles-ci, la matrice de modems (M_{xy}) et/ou la matrice d'antennes (AMx) étant configurées individuellement en fonction du cas d'utilisation respectif ou de la demande du client.

2. Système de communication radio mobile selon la revendication 1,
**caractérisé en ce que**
la matrice de modems (M_{xy}) communique côté données avec plusieurs modules CPU (CPU) par l'intermédiaire d'un système de bus (BUS), le module CPU respectif étant spécifié sur le type de contrat respectif.

3. Système de communication radio mobile selon la revendication 1 ou 2,
**caractérisé en ce que**
la matrice de modems (M_{xy}) dispose d'au moins trois modems (modem 0 ; modem 1 ; modem 2), au moins deux des modems se partageant les antennes extérieures (A) par l'intermédiaire d'un répartiteur respectif (5).

4. Système de communication radio mobile selon l'une des revendications précédentes,
**caractérisé en ce que**
n antennes extérieures (A) du véhicule respectif sont connectées à xy modems par l'intermédiaire de m matrices d'antennes avec m comme degré MIMO, n étant ≥ m.
